# EUROPÄISCHE PATENTSCHRIFT

(11) **EP 2 553 299 B1**
(45) Veröffentlichungstag und Bekanntmachung des Hinweises auf die Patenterteilung: **23.07.2014**
(21) Anmeldenummer: 11713169.8
(22) Anmeldetag: 25.03.2011
(51) Int. Cl.: F16K 15/14, E03C 1/298

(54) **VENTIL ZUM EINBAU IN EINEN SANITÄRAPPARAT**
VALVE FOR INTEGRATING INTO A SANITARY APPLIANCE
BONDE POUR APPAREIL SANITAIRE

(30) Priorität: 30.03.2010 CH 4662010
(43) Veröffentlichungstag der Anmeldung: 06.02.2013
(73) Patentinhaber: Enswico IP AG, 6060 Sarnen (CH)
(72) Erfinder: KELLER, Hans, CH-8053 Zürich (CH)
(74) Vertreter: Gachnang, Hans Rudolf
(86) Internationale Anmeldenummer: PCT/CH2011/000062
(87) Internationale Veröffentlichungsnummer: WO 2011/120177

(56) Entgegenhaltungen:
- EP-A2- 1 174 549
- EP-A2- 1 477 617
- US-A- 3 967 645
- US-A1- 2006 253 084

## Beschreibung

Gegenstand der Erfindung ist ein Ventil zum Einbau in einen Sanitärapparat gemäss Oberbegriff des Patentanspruchs 1.

Sanitärapparate wie Urinale benötigen für die Spülung sehr viel Wasser. Dieses ist heute einerseits in vielen Weltgegenden sehr rar und andererseits fallen in den Industriestaaten hohe Kosten für die Abwasserreinigung an. Es sind daher schon verschiedene Ventile auf den Markt gebracht worden, welche keine Spülung benötigen, d.h. der Urin läuft durch das Ventil ab und dieses schliesst sich derart dicht, dass kein Geruch aus der Kanalisation in den Sanitärraum aufsteigen kann. Einige dieser Ventile für wasserlose Urinale benutzen eine Sperrflüssigkeit. Eine solche ist jedoch der Umwelt nicht sehr zuträglich, sie verliert mit der Zeit ihre Wirkung und sie muss in verhältnismässig kurzen Abständen nachgefüllt/ersetzt werden. Dies führt einerseits zu hohen Herstellungskosten und andererseits zu Arbeitskosten in einem Bereich, der bei Putzequipen ohnehin nicht sehr beliebt ist.

Aus der EP 1 579 133 ist ein Ventil bekannt, das oben einen trichterförmigen Einlaufabschnitt aufweist und an dem sich unten an den Einlaufabschnitt zwei an der Oberkante mit dem Einlaufabschnitt verbundene Lappen anschliessen. Bei Zufuhr von Flüssigkeit (Urin) werden die beiden Lappen auseinandergedrückt und die Flüssigkeit kann nicht nur unten, sondern auch seitlich austreten. Sobald die Flüssigkeitszufuhr unterbrochen wird, schmiegen sich die beiden Lappen parallel aneinander und dichten dadurch das Kanalrohr unterhalb des Urinals gegenüber dem Sanitärraum vollständig ab. Solche Ventile benötigen keine Wartung und sie bleiben frei von Rückständen und sind somit für Tausende von Benutzungen stets betriebsbereit.

Bei fachmännischer Reinigung der Urinale, beispielsweise mit geeigneten Flüssigkeiten, ist die Funktionsfähigkeit dauerhaft gewährleistet. Da hingegen Reinigungsequipen oft, wie gewohnt bei der Reinigung herkömmlicher mit Wasserspülung funktionierender Urinale, äusserst scharfe Reinigungsmittel und Chemikalien einsetzen, besteht die Gefahr, dass sich die hauchdünnen Lappen verformen und dadurch eine vollständige gegenseitige Kontaktierung nicht dauerhaft gewährleistet ist.

Eine Aufgabe der vorliegenden Erfindung besteht nun darin, das Ventil derart weiterzubilden, dass auch bei unsachgemässer Verwendung von Reinigungsmitteln das Ventil über einen grossen Zeitraum und für Zehntausende von Benutzungen funktionsfähig bleibt.

Es hat sich weiter gezeigt, dass bei Zufuhr einer sehr grossen Wassermenge, z.B. wenn Reinigungsequipen Schmutzwasser von der Bodenreinigung in das Urinal giessen, der Durchsatz dieser Flüssigkeit sehr gering ist und dadurch die Gefahr besteht, dass aus Ungeduld mit irgendwelchen Werkzeugen, z.B. Schraubendrehern versucht wird, den Ablauf zu beschleunigen. Dabei kann das sehr empfindliche Ventil beschädigt und damit dessen Wirkung sofort verloren gehen.

Es ist daher eine weitere Aufgabe der Erfindung, das Ventil derart weiterzubilden, dass auch grössere Durchflussmengen möglich sind, ohne dass dabei das Ventil einen Rückstau verursacht wird.

Gelöst wird diese Aufgabe durch ein Ventil gemäss den Merkmalen des Patentanspruchs 1.

Das erfindungsgemässe Ventil ermöglicht weiterhin den Austritt von Flüssigkeit sowohl entlang der seitlichen Kanten als auch der Unterkante, die vorzugsweise schräg gestellt ist; andererseits verhindern die Verbindungen zwischen den beiden lappenförmigen Elementen eine Verformung der Lappen und dadurch den Verlust der Dichtigkeit.

Durch das Anbringen von Öffnungen in den lappenförmigen Elementen gemäss Anspruch 6 kann eine über das normale Mass hinaus gehende Durchflussmenge ohne weiteres abgeleitet werden, so dass ein Rückstau verhindert wird.

Anhand illustrierter Ausführungsbeispielen wird die Erfindung näher erläutert. Es zeigen
- Fig. 1: einen Querschnitt durch ein Urinal mit einem darin eingesetzten Ventil,
- Fig. 2: eine perspektivische Darstellung eines erfindungsgemässen Ventilkörpers 13 unter Weglassung eines den Ventilkörper aufnehmenden Adapters 15, dessen Aussendurchmesser an den Querschnitt der Durchgangsbohrung im Urinal angepasst ist,
- Fig. 3: eine Aufsicht auf den Ventilkörper,
- Fig. 4: einen Vertikalschnitt durch den Ventilkörper längs Linie IV - IV in Fig. 5,
- Fig. 5: eine Seitenansicht des Ventilkörpers,
- Fig. 6: einen Vertikalschnitt des Ventilkörpers einer weiteren Ausgestaltung der Erfindung,
- Fig. 7: eine Seitenansicht des Ventilkörpers gemäss Fig. 6,
- Fig. 8: einen Horizontalschnitt durch den Ventilkörper längs Linie VIII-VIII in Figur 4 ohne Durchfluss,
- Fig. 9: einen Horizontalschnitt durch den Ventilkörper längs Linie VIII-VIII in Figur 4 mit Durchfluss, infolge Flüssigkeitsdurchsatz gedehnt,
- Fig. 10: einen Horizontalschnitt durch den Ventilkörper längs Linie X-X in Figur 6,
- Fig. 11: einen Horizontalschnitt durch den Ventilkörper längs Linie X-X in Figur 6, durch Flüssigkeit gebläht,
- Fig. 12: einen Schnitt durch den Ventilkörper gemäss Linie XII-XII in Figur 6,
- Fig. 13: einen Schnitt durch den Ventilkörper gemäss Linie XII-XII in Figur 6, gebläht und Kiemen gespreizt, und
- Fig. 14: ist eine vergrösserte Darstellung des Kantenbereichs A in Figur 11.

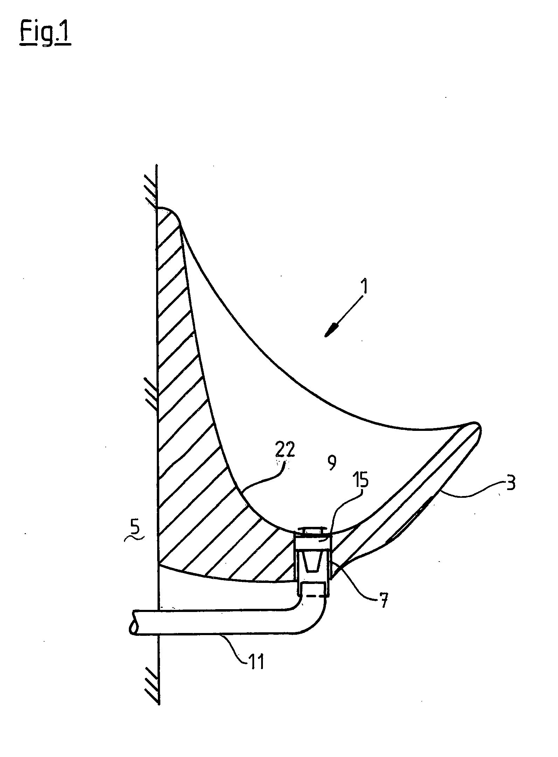

Es zeigt Figur 1 einen Vertikalschnitt durch ein Urinal 1, umfassend einen Aufnahmebereich 3 aus Keramik, Metall oder Kunststoff. Das Urinal 1 ist an einer Wand 5 befestigt. An der tiefsten Stelle des Aufnahmebereichs 3 ist in einer Durchgangsbohrung 7 ein Ventil 9 eingesetzt. Das Ventil 9 steht in Verbindung mit einer Ablaufleitung 11, die zur nicht dargestellten Kanalisation führt. Das Ventil 9 kann auch in anders geformten Sanitärapparaten, wie Urinalrinnen und dergleichen, eingesetzt sein und übernimmt die Funktion eines Syphons.

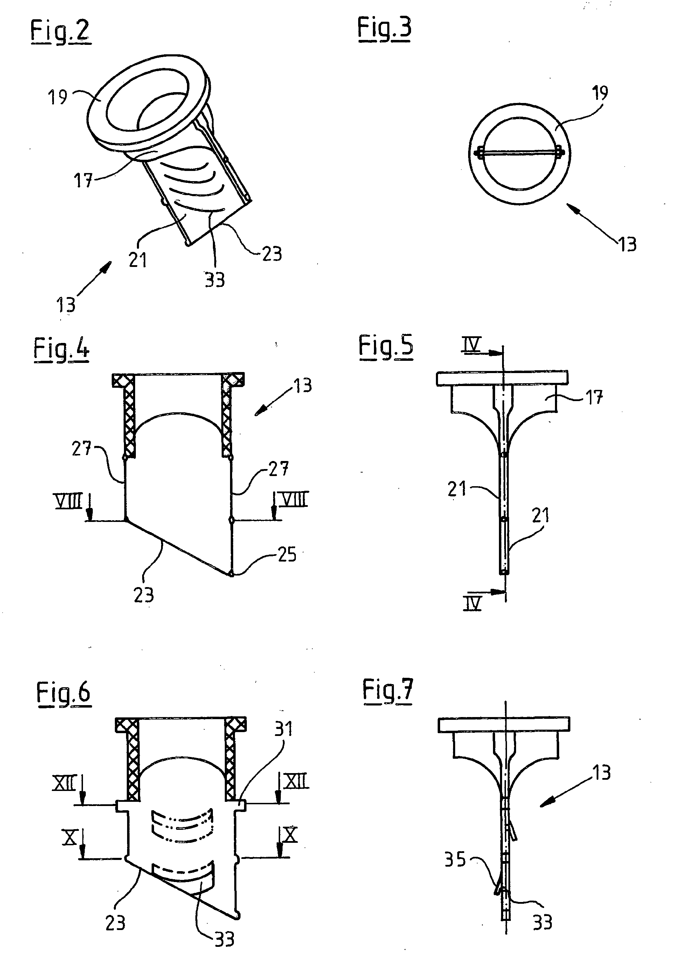

Der Ventilkörper 2, gemäss Fig. 1 umfasst einen trichterförmigen Einlaufabschnitt 17, an dessen Oberkante ein Flansch 19 zum Befestigen des Ventilkörpers 13 am Adapter ausgebildet ist. An der Unterkante des linienförmig zusammenlaufenden trichterförmigen Einlaufabschnitts 17 schliessen zwei lappenförmige Elemente 21 an, die flach aneinander anliegen und vorzugsweise in einer schräg verlaufenden Unterkante 23 enden. Die lappenförmigen Elemente 21 sind im ersten Ausführungsbeispiel gemäss den Fig. 2 bis 5 an den Enden der Unterkante 23 durch Schweiss- oder Klebepunkte 25, kurz Verbindungen 25 in gegenseitiger Verbindung. Die zwischen den Punkten liegenden Abschnitte der Unterkante 23 und der Seitenkanten 27 und 29 der beiden lappenförmigen Elemente 21 sind nicht verbunden, d.h. sie erlauben auch den seitlichen Ausfluss von Flüssigkeit, wenn solche von oben den Ventilkörper 13 durchfliesst. Zusätzlich zu einzelnen Verbindungen 25 an den unteren Enden der Seitenkante 27 können auch eine oder allenfalls zwei weitere Verbindungen 25 vorgesehen sein.

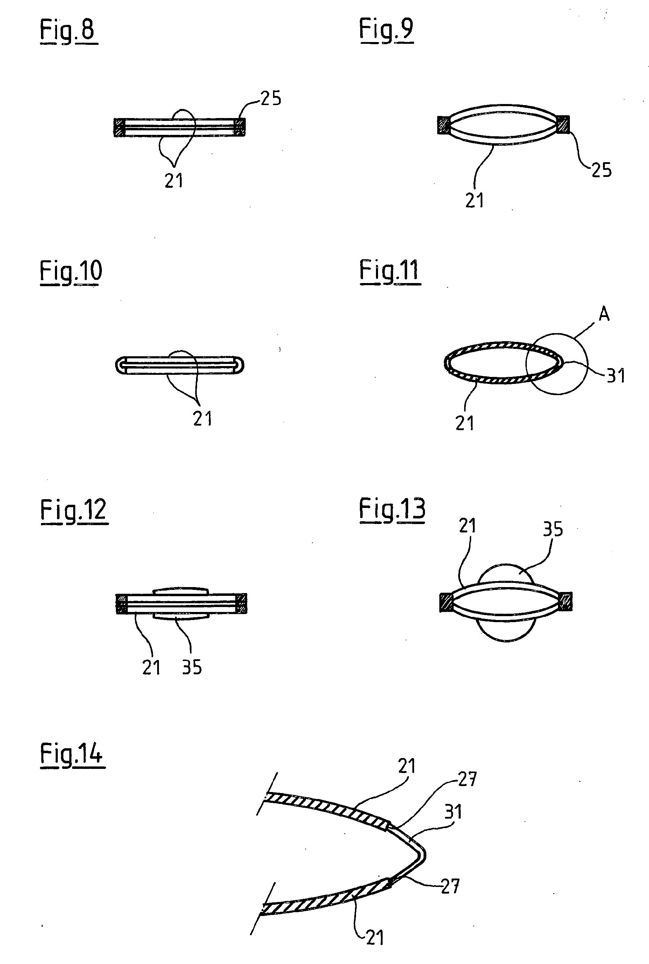

In der Ausgestaltung der Erfindung gemäss den Figuren 6, 7 und 10 bis 14 sind die Verbindungen 25 der beiden lappenförmigen Elemente 21 nicht innerhalb der Elemente 21 angebracht, sondern an Ausbuchtungen 29, d.h. die trapezförmige Fläche der Elemente 21 wird von den Verbindungen 25 nicht berührt. Es bleibt daher der volle Durchlaufquerschnitt für die Flüssigkeit erhalten. In der Ausgestaltung gemäss Figur 6 (oben) und Figur 11 sind an den Seitenkanten 27 nicht Verklebungen oder Schweisspunkte, sondern schlaufenförmige, nach aussen ragende band- oder fadenförmige Verbindungen 31 zwischen den übereinander liegenden Kanten ausgebildet, vergleiche insbesondere Figur 14. Diese ermöglichen beim Durchfluss von Flüssigkeit den seitlichen Austritt, d.h. zwischen den Kanten 27 hindurch auch im Bereich der Verbindungen 25.

In einer bevorzugten Ausgestaltung der Erfindung gemäss den Figuren 2, 6, 7, 12 und 13 ist in mindestens einem der lappenförmigen Elemente 21 mindestens ein Schlitz 33 eingelassen, der bei erhöhter Durchflussmenge den Austritt von Flüssigkeit nicht nur entlang der Kanten 27 und 23 erlaubt, sondern auch zusätzlich durch die Elemente 21. Es können auch mehrere parallel liegende, gerade oder gebogen verlaufende Schlitze 33 vorgesehen sein, sowohl auf nur einem Element 21 oder an beiden Elementen 21. Die Schlitze 33 können einander gegenüber liegen oder versetzt zueinander angebracht sein, wie in Figur 6 in gebrochenen Linien dargestellt. In der Ausgestaltung der Schlitze 33 gemäss Fig. 7 sind diese von "Kiemen" 35 überdeckt, d.h. wenn kein Durchfluss stattfindet, liegen die Kiemen 35 über den Schlitzen 33 an den Elementen 21 an und decken diese dichtend ab. Bei hohem Durchfluss heben sich die Kiemen 35 von dem Schlitten 33 ab. Vergleichbar sind die Kiemen mit denjenigen an Fischen.

## Patentansprüche

1. Ventil zum Einbau in einen Sanitärapparat, umfassend oben einen trichterförmigen Einlaufabschnitt (17) mit einem oben ausgebildeten Flansch (19) und einem unten an dem Einlaufabschnitt (17) anschliessenden Dichtungsabschnitt, umfassend zwei je einseitig mit dem Einlaufabschnitt verbundene, flach aneinander zum Anliegen bestimmte lappenförmige Elementen (21), welche entlang der seitlichen Kanten und der Unterkante zum Zulassen des Austritts von Flüssigkeit vorgesehen sind,
**dadurch gekennzeichnet, dass**
an den beiden seitlichen Kanten der lappenförmigen Elemente (21) an mindestens einer Stelle im Bereich der Unterkante (23), die beiden lappenförmigen Elemente (21) durch Verbindungen (25, 29, 31) miteinander verbunden sind.

2. Ventil nach Anspruch 1, **dadurch gekennzeichnet, dass** die Verbindungen (25, 29) an den Kanten (23, 27) durch Verschweissen, Verkleben oder mit Verbindungselementen (31) erfolgt.

3. Ventil nach einem der Ansprüche 1 oder 2, **dadurch gekennzeichnet, dass** die Verbindungen direkt an den Kanten (23, 27) oder nach innen versetzt oder auf von den Kanten nach aussen ragenden Lappen (29) ausgebildet sind.

4. Ventil nach einem der Ansprüche 1 oder 2, **dadurch gekennzeichnet, dass** die Verbindungen (29) aus fadenoder bandförmigen Schlaufen (31) bestehen, welche die übereinander liegenden Kanten (27) verbinden, gebildet werden.

5. Ventil nach einem der Ansprüche 1 bis 4, **dadurch gekennzeichnet, dass** oberhalb der unten liegenden Verbindungen je eine oder mehrere gleiche oder ungleiche Verbindungen ausgebildet sind.

6. Ventil nach einem der Ansprüche 1 bis 5, **dadurch gekennzeichnet, dass** auf mindestens einem der lappenförmigen Elemente (21) eine schlitzförmige Öffnung (33) für den Austritt von Flüssigkeit ausgebildet ist, durch welche die Durchflussmenge an Flüssigkeit gegenüber einem ungeschlitzten Ventil erhöht wird.

7. Ventil nach Anspruch 6, **dadurch gekennzeichnet, dass** an beiden lappenförmigen Elementen (21) mindestens je eine schlitzförmige Öffnung ausgebildet ist.

8. Ventil nach einem der Ansprüche 6 oder 7, **dadurch gekennzeichnet, dass** an mindestens einem lappenförmigen Element (21) nebeneinander mehrere Öffnungen (33) ausgebildet sind.

9. Ventil nach einem der Ansprüche 7 oder 8, **dadurch gekennzeichnet, dass** die Öffnungen (33) an den beiden lappenförmigen Elementen (21) einander gegenüber liegen oder versetzt zueinander liegen.

10. Ventil nach einem der Ansprüche 6 bis 9, **dadurch gekennzeichnet, dass** die Öffnungen (33) von in Fliessrichtung der Flüssigkeit ausgerichtete, die Öffnungen (33) überdeckende Kiemen ausgebildet sind.

## Claims

1. A valve for integrating into a sanitary appliance, comprising at the top a funnelshaped inflow section (17) having a flange (19) configured at the top, and at the bottom a sealing section contiguous with the inflow section (17), comprising two lug-type elements (21) each connected on one side with the inflow section and intended to lie flat against one another, and which are provided along the lateral edges and the lower edge to permit the escape of liquid,
**characterised in that**
on the two lateral edges of the lug-type elements (21) at at least one point in the region of the lower edge (23), the two lug-types elements (21) are interconnected by connections (25, 29, 31).

2. The valve of claim 1 wherein the connections (25, 29) are effected at the edges (23, 27) by welding, bonding or with connecting elements (31).

3. The valve of claim 1 or 2 wherein the connections are configured directly on the edges (23, 27) or inwardly offset or on lugs (29) projecting outward from the edges.

4. The valve of claim 1 or 2 wherein the connections (29) consist of thread-like or band-like loops (31) which connect the edges (27) lying one above the other.

5. The valve of any one of claims 1 to 4 wherein one or a plurality of identical or dissimilar connections are configured above the lower connections.

6. The valve of any one of claims 1 to 5 wherein a slit-like opening (33) for the escape of liquid by which the flow volume of liquid is increased compared with an unslitted valve is configured on at least one of the lug-type elements (21).

7. The valve of claim 6 wherein at least one slit-like opening is configured on each of both lug-type elements (21).

8. The valve of any one of claims 6 or 7 wherein a plurality of openings (33) are configured next to one another on at least one lug-type element (21).

9. The valve of claims 7 or 8 wherein the openings (33) on the two lug-type elements (21) lie opposite to or offset against one another.

10. The valve of any one of claims 6 to 9 wherein the openings (33) are configured by gills aligned in the direction of flow of the liquid and covering the openings (33).

## Revendications

1. Bonde dévolue à l'intégration dans un appareil sanitaire et comportant, en partie haute, une zone infundibuliforme d'afflux (17) comprenant une collerette (19) ménagée en partie haute, et une zone d'étanchement se rattachant à ladite zone d'afflux (17), en partie basse, et munie de deux éléments (21) en forme de pattes qui sont reliés à ladite zone d'afflux, sur un côté respectif, sont destinés à venir porter à plat l'un contre l'autre, et sont prévus le long des arêtes latérales et de l'arête inférieure, afin d'autoriser la sortie de liquide,
**caractérisée par le fait que**
les deux éléments (21) en forme de pattes sont reliés l'un à l'autre sur les deux arêtes latérales desdits éléments (21) en forme de pattes, par l'intermédiaire de solidarisations (25, 29, 31), en au moins un emplacement situé dans la région de l'arête inférieure (23).

2. Bonde selon la revendication 1, **caractérisée par le fait que** les solidarisations (25, 29) sont instaurées, sur les arêtes (23, 27), par soudage, par collage ou à l'aide d'éléments de liaison (31).

3. Bonde selon l'une des revendications 1 ou 2, **caractérisée par le fait que** les solidarisations sont ménagées directement sur les arêtes (23, 27) ou avec décalage vers l'intérieur, voire sur des languettes (29) saillant vers l'extérieur au-delà desdites arêtes.

4. Bonde selon l'une des revendications 1 ou 2, **caractérisée par le fait que** les solidarisations (29) sont constituées par des boucles (31) en forme de fils ou de rubans, qui relient les arêtes (27) agencées en superposition.

5. Bonde selon l'une des revendications 1 à 4, **caractérisée par le fait qu'**une, ou plusieurs solidarisations identiques ou différentes, est (sont) respectivement ménagée(s) au-dessus des solidarisations sous-jacentes.

6. Bonde selon l'une des revendications 1 à 5, **caractérisée par le fait qu'**un orifice (33) en forme de fente, affecté à la sortie de liquide et par l'intermédiaire duquel la quantité de liquide débitée est accrue comparativement à une bonde non fendue, est pratiqué dans au moins l'un des éléments (21) en forme de pattes.

7. Bonde selon la revendication 6, **caractérisée par le fait qu'**au moins un orifice, en forme de fente, est respectivement pratiqué dans les deux éléments (21) en forme de pattes.

8. Bonde selon l'une des revendications 6 ou 7, **caractérisée par le fait que** plusieurs orifices (33) sont pratiqués, en juxtaposition, dans au moins un élément (21) en forme de patte.

9. Bonde selon l'une des revendications 7 ou 8, **caractérisée par le fait que** les orifices (33), pratiqués dans les deux éléments (21) en forme de pattes, occupent des emplacements réciproquement opposés ou mutuellement décalés.

10. Bonde selon l'une des revendications 6 à 9, **caractérisée par le fait que** les orifices (33) se présentent comme des branchies orientées dans la direction de l'écoulement du liquide, qui recouvrent lesdits orifices (33).
